**Europäisches Patentamt**

**European Patent Office**

**Office européen des brevets**

(19)

(11) Veröffentlichungsnummer: **0 146 881 B2**

(12) **NEUE EUROPÄISCHE PATENTSCHRIFT**

(45) Veröffentlichungstag der neue Patentschrift:
**20.12.95**

(51) Int. Cl.6: **C08L 61/10**, C08G 8/28, C08G 14/08, C08K 5/21

(21) Anmeldenummer: **84115270.5**

(22) Anmeldetag: **12.12.84**

(54) **Verfahren zur Herstellung von modifizierten Phenolharz-Bindemitteln und deren Anwendung zur Herstellung von Spanplatten**

(30) Priorität: **21.12.83 DE 3346153**

(43) Veröffentlichungstag der Anmeldung:
**03.07.85 Patentblatt 85/27**

(45) Bekanntmachung des Hinweises auf die Patenterteilung:
**08.03.89 Patentblatt 89/10**

(45) Bekanntmachung des Hinweises auf die Entsheidung über den Einspruch:
**20.12.95 Patentblatt 95/51**

(84) Benannte Vertragsstaaten:
**AT BE CH DE FR GB IT LI NL SE**

(56) Entgegenhaltungen:
EP-A- 0 080 635        EP-B- 0 069 267
GB-A- 1 064 553        SU-A- 922 112
US-A- 3 265 652        US-A- 3 790 442
US-A- 4 045 595

UREA-FORMALDEHYDE RESINS, Beat Meyer, Addison-Wesley Publishing Company, London, 1979, p. 114-117 ;

(73) Patentinhaber: **RWE-DEA Aktiengesellschaft für Mineraloel und Chemie**
**Postfach 60 04 49**
**D-22204 Hamburg (DE)**

(72) Erfinder: **Buschfeld, Adolf**
**Bergstrasse 3**
**D-4234 Alpen (DE)**
Erfinder: **Lattekamp, Matthias**
**Drüpter Strasse 32**
**D-4134 Rheinberg 2 (DE)**
Erfinder: **Ripkens, Gerd**
**Wiesenbruchstrasse 27**
**D-4132 Kamp-Lintfort (DE)**
Erfinder: **Schittek, Hans**
**Händelstrasse 26**
**D-4133 Neukirchen-Vluyn (DE)**

(74) Vertreter: **Schupfner, Gerhard D.**
**Patentanwälte**
**Müller, Schupfner & Gauger**
**Postfach 17 53**
**D-21236 Buchholz (DE)**

**EP 0 146 881 B2**

**Beschreibung**

Phenolharze werden seit langem in der Holzwerkstoffindustrie für die Herstellung bedingt witterungsbeständiger Spanplatten (Qualität V 100, DIN 68763) eingesetzt. Es handelt sich hierbei um wäßrige, alkalisch härtende Phenolformaldehydkondensate, hergestellt durch Umsetzung von Phenol und Formaldehyd in Gegenwart von Alkalien im Molverhältnis von Phenol zu Formaldehyd von 1 : 1,5 bis 3,5, bevorzugt 1 : 2 bis 2,7, deren Qualität im wesentlichen durch den Feststoffgehalt, die Viskosität und den Alkaligehalt festgelegt ist.

Je höhermolekular diese Harze sind, desto größer sind ihre Bindefestigkeit und um so kürzer ihre Härtezeit und damit auch die erforderliche Preßzeit der Spanplatten. Die Molekülgröße bzw. der Kondensationsgrad ist bei vorgegebenen Feststoffgehalten und Viskositäten in starkem Maße vom Alkaligehalt abhängig, d. h. je größer bei der Herstellung der Anteil an Alkaliphenolat ist, desto höher ist der Kondensationsgrad dieser Harze.

Um die Hygroskopizität phenolharzgebundener Spanplatten zu vermindern und damit Folgeschäden durch Feuchteeinwirkung auszuschließen, wird in den letzten Jahren verstärkt versucht, die Alkalibelastung der Spanplatte durch Reduzierung der Alkaligehalte der Harze zu senken. So ist man bei der Herstellung von Spanplatten in den vergangenen Jahren von den stark alkalischen, etwa 10 bis 12 % Natriumhydroxid enthaltenden 45 bis 48 %-igen Phenolharzen zu alkaliärmeren Harzen mit 5 bis 8 % NaOH übergegangen, die aber einen naturgemäß niedrigeren Kondensationsgrad haben und infolge starken Verschlagens in die Holzfaser zu verminderter Bindefestigkeit und aufgrund der schwächeren Reaktivität zu längeren Preßzeiten führen. Des weiteren werden durch die Verringerung des Alkaligehaltes die Harze unwirtschaftlicher, da Alkali gegenüber Phenol und Formaldehyd der preiswertere Rohstoff ist.

Andererseits werden, um die mit hohen Betriebskosten belasteten Spanplattenfertigungsanlagen optimal auszunutzen, für die Verleimung der bedingt witterungsbeständigen Spanplatten zusätzlich zu den alkalisch härtenden Phenolharzen in den letzten Jahren verstärkt Isocyanatbindemittel, insbesondere oligomeres Diphenylmethan-4-4'-diisocyanat (MDI) und sauer härtende Mischkondensate auf Basis Phenol, Melamin und Harnstoff wegen ihrer kurzen Preßzeiten als Bindemittel eingesetzt. Trotz der erheblich höheren Kosten für diese Bindemittel ist die Fertigung von Spanplatten, bedingt durch die Verringerung der Preßzeit, wirtschaftlich. Allerdings ist die Verarbeitung von MDI in der Regel durch eine hohe Klebneigung gegenüber den Preßblechen schwierig und mit zusätzlichen Kosten verbunden.

In der DE-PS-2 944 178 werden Phenolharze beschrieben, in denen der hohe Kondensationsgrad alkalireicher Bindemittel durch Senkung des Feststoffgehaltes mittels Wasser auf 30 bis 41 % bei gleicher Viskosität erhalten bleibt. Diese Harze beeinflussen jedoch durch ihre niedrigen Feststoffgehalte den Wasserhaushalt der Spanplatte. Die Späne müssen entweder stärker als üblich zurückgetrocknet, oder die Preßzeiten müssen zum Ausdampfen des Wassers aus der Platte verlängert werden. Diese Harze eignen sich daher ausschließlich zur Anwendung in der Deckschicht von Spanplatten.

Es ist bisher vergeblich versucht worden, den hohen Kondensationsgrad alkalireicher Bindemittel auf alkaliarme Systeme ohne Erniedrigung des Feststoffgehaltes der Harze zu übertragen, da bekanntlich für derartige Phenolharze die besten Lösemittel Wasser und wäßriges Alkali sind.

Der Erfindung liegt die Aufgabe zugrunde, ein wirtschaftlich vorteilhaftes Phenolharz mit hohem Kondensationsgrad und gleichzeitig hohem Feststoffgehalt zu entwickeln, welches als Bindemittel zur Herstellung von Spanplatten geeignet ist.

Diese Aufgabe wird erfindungsgemäß dadurch gelöst, daß Phenolformaldehydharze mit einer Viskosität von mindestens 600 mPa.s (bei 20°C) bei einem Feststoffgehalt von 20 bis 55 % in an sich bekannter Weise hergestellt und den erhaltenen viskosen Phenolharzlösungen 2 bis 30 Gew.-% Harnstoff, bezogen auf die Phenolharzlösung, zugesetzt werden, wobei die Herstellung der Phenolformaldehydharze mit soviel Alkali erfolgt, daß die resultierende modifizierte Harzlosung 2 bis 12 Gew.-% Alkali, berechnet als NaOH, enthält.

Hierbei werden die Phenolformaldehydharze zunächst mit einer Viskosität bis zu 20 000 mPa.s (bei 20°C), bevorzugt bis 10 000 mPa.s (bei 20°C), in an sich bekannter Weise hergestellt.

Der Feststoffgehalt der modifizierten Harzlosungen liegt zwischen 30 und 65 %, bevorzugt 40 und 60 %.

Die Zugabe des Harnstoffs erfolgt im alkalischen Milieu. Der Harnstoff kann zur noch heißen oder zur abgekühlten Phenolharzlösung zugegeben werden.

Es wurde überraschenderweise gefunden, daß die nachträgliche Zugabe von Harnstoff zu hochkondensierten und damit hochviskosen Phenolharzen, die in dieser Form weder verarbeitbar noch lagerfähig sind, zu feststoffreichen niedrigviskosen, lagerstabilen und damit verarbeitbaren Phenolresolen üblicher Feststoffgehalte führt, die sich wie die Beispiele zeigen - sehr gut zur Herstellung bedingt witterungsbeständiger

2

Spanplatten eignen. Die überraschenderweise stark viskositätserniedrigende Wirkung des Harnstoffs auf hochmolekulare Phenolharze, die vergleichbar mit der des Wassers oder wäßrigen Alkalis ist, ermöglicht so die Herstellung alkaliarmer hochkondensierter Harze, die frei von zusätzlichem Wasserballast sind und deren Lagerfähigkeit gegenüber dem Ausgangsharz durch die Bildung von Methylolharnstoffen (Anlagerung des freien Formaldehyds der Harzlösung an Harnstoff) erheblich verbessert wird. Dieser Effekt wird besoners bei Alkaligehalten von 6 % und weniger deutlich. Erfindungsgemäß kann nun wesentlich höher als bisher möglich, kondensiert werden, da durch die Zugabe des Harnstoffs die Viskosität herabgesetzt, der Feststoffgehalt jedoch erhöht wird.

Der im vorliegenden alkalischen Milieu von einem Teil des Harnstoffs mit noch vorhandenem Formaldehyd gebildete Methylolharnstoff greift nicht selbst in die Kondensationsreaktion ein und führt nicht zu den unerwünschten feuchtempfindlichen, Formaldehyd freisetzenden Harnstoffformaldehydkondensationsprodukten, sondern kann mit noch freien Bindungsvalenzen des Phenols als Formaldehyddonor für die Phenolformaldehydreaktion voll wirksam werden. So liegen auch die Formaldehydemissionswerte nach der Perforatormethode mit unter 5 mg in für Phenolharze üblichem Rahmen.

Die erfindungsgemäßen Harze können sowohl mit niedrigem Alkaligehalt als auch mit hohem Alkaligehalt hergestellt werden.

Die erfindungsgemäßen Harze, deren Alkaligehalte 2 bis 6 %, bevorzugt 3 bis 5 % betragen, eigenen sich sehr gut als schnellhärtende Bindemittel für die Deckschichten der Spanplatten, denen sie hohe Festigkeiten verleihen. Diese werden schon nach sehr kurzen Preßzeiten erhalten.

Für diese erfindungsgemäßen Harze spricht auch die wesentlich geringere Alkalibelastung der Späne, die beim Vergleich mit den Harzen nach der DE-PS-2 944 178 um 22 % günstiger liegt.

Für die Beleimung der Mittelschichtspäne sind die erfindungsgemäßen Harze mit 2 bis 6 Gew.-% Alkali - wie alle alkaliarmen Harze - als Alleinbindemittel nicht geeignet, da die Alkalinität der Harze zu gering ist, um bei den heute üblichen kurzen Preßzeiten und bei den in den Mittellagen der Spanplatten während der Verpressung auftretenden Temperaturen von nur 100 bis 110° C schnell genug aushärten zu können. Es hat sich jedoch herausgestellt, daß die erfindungsgemäßen Phenolharze in Kombination mit Diisocyanaten hervorragende Bindefestigkeiten ergeben, die mit denen reiner Isocyanatbindungen praktisch vergleichbar sind, was einen erheblichen wirtschaftlichen Vorteil bedeutet. Besonders geeignet ist oligomeres Diphenylmethan-4-4'-diisocyanat (Isocyanat-Bindemittel MDI). Die Anwendung dieser Kombination ermöglicht im Vergleich zur reinen Isocyanatbindung sogar noch kürzere Preßzeiten. Auch auf einer derart gebundenen Mittelschicht wird kein Formaldehyd an die Umgebung abgegeben, wie die Messung des freigesetzten Formaldehyds an der fertigen Spanplatte (Perforator-Methode) zeigt.

Die erfindungsgemäßen Harze, deren Alkaligehalte mehr als 6 bis 12 %, bevorzugt 7 bis 10 % betragen, eignen sich sehr gut als schnellhärtende Alleinbindermittel zur Herstellung von Spanplatten. Diese werden nach bisher nicht möglichen, sehr kurzen Preßzeiten erhalten. Ihr hoher Kondensationsgrad erlaubt eine Verkürzung der Preßzeit bis zu 25 %. Ihr für Spanplattenbindemittel auf Phenolbasis bisher unüblich hoher Feststoffgehalt bietet für den Feuchtehaushalt der Späne erhebliche Vorteile, und letztlich sind sie aufgrund ihres Harnstoffgehalts kostengünstiger.

Gegenüber den bisher gebräuchlichen Phenolharzen erlauben die erfindungsgemäßen feststoffreicheren Harze bei gleicher Feststoffbeleimung die Verwendung von wesentlich feuchteren Spänen, was als bedeutender wirtschaftlicher Vorteil anzusehen ist. So werden 100 kg Span bei einer Beleimung von beispielsweise 8 % Feststoff (bezogen auf Trockenspan) bei der Anwendung eines alkalireicher erfindungsgemäßen 53 %-igen Phenolharzes mit nur 7,1 Wasser (15,1 kg Harzlösung) im Vergleich zu 9,8 kg (17,8 kg Harzlösung) eines herkömmlichen 45 %-igen Harzes belastet, d. h. bei der Verpressung sind aus der Mittelschicht 3 kg Wasser/100 kg Span weniger zu verdampfen, oder aber es genügt, den Span auf eine um 3 % höhere Restfeuchte zu trocknen.

Die Anwendung der feststoffreichen, hochkondensierten, niedrigviskosen Phenolharze, die erfindungsgemäß durch nachträgliche Zugabe von Harnstoff zu hochmolekularen Phenolformaldehydkondensaten erhalten werden, führt zu Spanplatten mit sehr guten Bindefestigkeiten.

Die Zugabe des Harnstoffs erfolgt am Ende der Phenolformaldehydreaktion. Damit kann auch die Lösungsenthalpie des Harnstoffs zur schnelleren Abkühlung des Reaktionsgemisches genutzt werden.

Setzt man den Harnstoff von vornherein dem alkalischen Reaktionsgemisch aus Phenol und Formaldehyd zu und kondensiert auf vergleichbare Verarbeitungsviskositäten, so erreichen die erhaltenen Harze die Bindefestigkeit sowie die kurzen Preßzeiten der erfindungsgemäßen Harze nicht. Darüber hinaus wird dort infolge von Nebenreaktionen bei der Kondensation Ammoniak freigesetzt, was sich zusätzlich in einer erhöhten Alkalität der Harze äußert sowie zu Geruchsbelästigungen führt.

Schließlich sind auch die neuartigen Harze aufgrund ihres Harnstoffgehalts kostengünstiger.

Die qualitativen Untersuchungen der erfindungsgemäß modifizierten Phenolharze wurden an dreischichtigen, 16 mm starken Spanplatten durchgeführt, deren Deckschichtspan/Mittelschichtspan-Verhältnis 35 : 65 betrug. Die Beleimungsmenge (Beleimungshöhe) der Deckschichtspäne betrug in allen Fällen 8 % Festharz/bezogen auf atro (absolut trockenen) Span.

Die Mittelschichtspäne wurden beim Einsatz der alkaliarmen Harte (Beispiel 1 bis 6) mit 6 % Festharz beleimt das entweder ausschließlich aus MDI (oligomeres 4,4'-Diphenylmethandiisocyanat) oder aus einer Kombination von 1 Teil MDI und 1 Teil Phenolharz (fest) besteht, wobei hier in das Phenolharz das MDI eingemischt und die resultierende Leimflotte auf die Späne aufgedüst wurde.

Beim Einsatz der alkalireichen Harze (Beispiel 7 bis 10) betrug die Beleimungshöhe der Deck-und Mittelschichtspäne in allen Fällen 8 % Festharz/bezogen auf atro (absolut trockenen) Span.

Zur Hydrophobierung der Späne wurde den Phenolharzen 1 % Paraffin, bezogen auf atro Span, in Form einer 50 %-igen Paraffinemulsion zugesetzt. Im Falle der ausschließlich mit MDI beleimten Mittelschicht wurde die Paraffinemulsion vorverdüst.

Die Späne wurden vor der Beleimung so getrocknet, daß nach der Beleimung Spanfeuchten von 16 % für die Deckschichtspäne und 9,5 % für die Mittelschichtspäne vorlagen. Die Spanplattenformlinge wurden von Hand gestreut und bei 180°C mit 22 bar in 2,4 bzw. 3,6 min verpreßt. Die Rohdichte der erhaltenen Spanplatten lag in allen Fällen bei 690 kg/m$^3$.

Die erfindungsgemäße Herstellung und Anwendung wird in den folgenden Beispielen erläutert. Die überlegene Qualität der neuartigen Phenolharze ist aus den Beispielen ersichtlich. Die Viskositäten wurden jeweils bei 20°C gemessen.

Zur Bestimmung des Feststoffgehalts wurde 1 g Substanz 2 Stunden im Umluftofen bei 120°C getrocknet.

**Beispiel 1**

Dieses Beispiel zeigt den viskositätserniedrigenden Einfluß von Harnstoff auf ein hochkondensiertes Phenolharz im Vergleich zu Wasser.

941 Gewichtsteile Phenol (10 Mol) und 288 Gewichtsteile 50 %-iger Natronlauge wurden in einem Kolben auf 80°C aufgeheizt. Innerhalb von 80 min wurden 2 780 Gewichtsteile Formalin 28 %-ig (26 Mol) zugegeben und anschließend bei dieser Temperatur bis zu einer Viskosität von 900 mPa.s kondensiert. Anschließend wurde die Temperatur auf 65°C gesenkt und die Reaktion nach Erreichen einer Viskosität von 2 000 mPa.s dadurch abgebrochen, daß auf je 1 000 Gewichtsteilen dieses Ansatzes im Falle 1 a) 144 Gewichtsteile Harnstoff, im Falle 1 b) 144 g Wasser zuchargiert wurden.

Tabelle I

| | 1 | 1a | 1b |
|---|---|---|---|
| Feststoffgehalt % | 37,2 | 45,1 | 32,5 |
| Viskosität b. 20°C mPa.s | 2000 | 215 | 280 |
| Gelierzeit b. 100°C min | 7 | 15 | 12 |
| Alkali (titriert, berechnet als NaOH) % | 3,4 | 3,0 | 3,0 |
| Formaldehydgehalt % | 3,6 | 0,2 | 3,2 |
| Alkali (theoretisch, berechnet als NaOH) % | 3,6 | 3,1 | 3,1 |

Aus der Tabelle ist der durch Harnstoff-Zusatz hervorgerufene starke Viskositätsabfall ersichtlich. Der freiliegende Formaldehyd wird praktisch vollständig in Methylolharnstoff überführt.

**Beispiel 2**

Dieses Beispiel zeigt den stark viskositätserniedrigenden Einfluß des Harnstoffs im Vergleich zu 50 %-iger Natronlauge auf ein hochkondensiertes Phenolformaldehydharz.

Die Herstellung des Harzes erfolgte wie unter Beispiel 1, wobei 941 Gewichtsteile Phenol (10 Mol), 388 Gewichtsteile Natronlauge 50 %-ig und 2 780 Gewichtsteile Formalin 28 %-ig (26 Mol) zur Anwendung kamen. Zu je 1 000 Gewichtsteilen des auf 2 000 mPa.s kondensierten Harzes 2) wurden im Fall 2 a) 141 Gewichtsteile Harnstoff und im Fall 2 b) 141 Gewichtsteile Natronlauge 50 %-ig zugegeben.

Tabelle II

|  | 2 | 2a | 2b |
|---|---|---|---|
| Feststoffgehalt % | 37,6 | 45,1 | 40,0 |
| Viskosität b. 20°C mPa.s | 2000 | 210 | 205 |
| Gelierzeit b. 100°C min | 7 | 14 | 26 |
| Alkali (titriert, berechnet als NaOH) % | 4,4 | 3,9 | 9,4 |
| Formaldehydgehalt % | 3,4 | 0,3 | 1,8 |
| Alkali (theoretisch, berechnet als NaOH % | 4,7 | 4,2 | 10,3 |

**Beispiel 3**

Entsprechend Beispiel 1 wurde aus 1 035 Gewichtsteiien (11 Mol) Phenol, 405 Gewichtsteilen Natronlauge 50 %-ig und 2 985 Gewichtsteilen Formalin 28,7 fig (28,6 Mol) ein hochmolekulares Phenolharz mit 1 250 mPa.s hergestellt, dem bei 70°C 550 Gewichtsteile Harnstoff zuchargiert wurden. Das Harz hatte folgende Kennzahlen:

| Feststoffgehalt % | 44,7 |
|---|---|
| Viskosität b. 20°C mPa.s | 215 |
| Gelierzeit b. 100°C min | 14 |
| Alkali (titriert, ber. als NaOH) % | 3,8 |
| Formaldehydgehalt % | 0,3 |
| Alkali (theoretisch, ber. als NaOH) % | 4,1 |

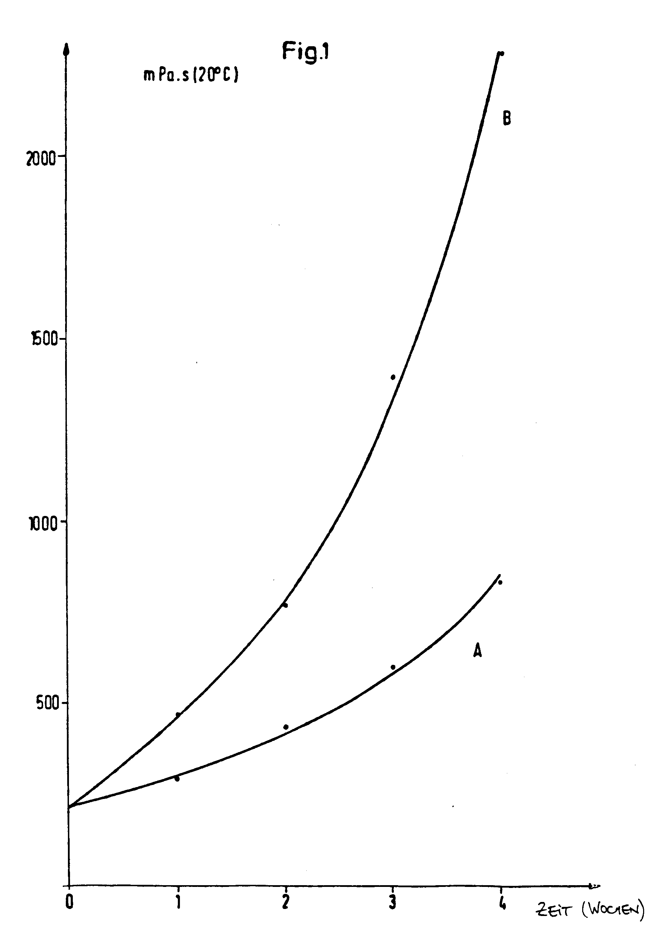

Dieses Harz wurde in Deck- sowie Mittelschicht dreischichtiger Spanplatten untersucht, deren Ergebnisse in Tabelle III wiedergegeben sind. Die Lagerfähigkeit des Harzes ist vorzüglich, siehe Kurve A von Fig. 1.

**Beispiel 4 (Vergleichsbeispiel)**

Im Vergleich zu Beispiel 3 wurden in einem Kolben zu 1 035 Gewichtsteilen Phenol (11 Mol), 405 Gewichtsteilen Natronlauge 50 %-ig und 550 Gewichtsteilen Harnstoff bei 80°C innerhalb von 80 min unter Beibehaltung der Temperatur 2 985 Gewichtsteile Formalin 28,7 %-ig (28,6 Mol) zudosiert. Die Kondensationsreaktion wurde bei einer Viskosität von 190 mPa.s abgebrochen und der Ansatz abgekühlt. Das Harz hatte folgende Kenndaten:

| Feststoffgehalt % | 44,9 |
|---|---|
| Viskosität b. 20°C mPa.s | 215 |
| Gelierzeit b. 100°C min | 17 |
| Alkali (titriert, ber. als NaOH) % | 4,25 |
| Formaldehydgehalt % | 0,35 |
| Alkali (theoretisch, ber. als NaOH) % | 4,1 |

Das Harz hatte eine sehr begrenzte Lagerfähigkeit, siehe Kurve B von Fig. 1.
Das Harz wurde in Spanplatten geprüft, deren Ergebnisse in Tabelle III wiedergegeben sind.

**Beispiel 5 (Vergleichsbeispiel)**

Dieses Beispiel beschreibt die Herstellung und Anwendung eines 35 % Feststoff enthaltenden unmodifizierten Phenolharzes aus der Patentschrift DE-PS-2 944 178.

Hierzu wurden 125 Gewichtsteile Phenol (2,4 Mol) und 400 Gewichtsteile Formalin 37 %-ig (4,9 Mol) in einem Kolben vorgelegt und auf 70°C vorgeheizt. Zu dieser Mischung wurden innerhalb 60 min 80 Gewichtsteile Natronlauge 50 %-ig zugegeben. Nach Chargierung von 295 Gewichtsteilen Wasser wurde die Temperatur auf 80°C gesteigert. Nach Erreichen der Viskosität von 190 mPa.s wurde der Ansatz abgekühlt.

Das erhaltene Harz hatte folgende Kennzahlen:

| | |
|---|---|
| Feststoffgehalt % | 35,1 |
| Viskosität b. 20 °C mPa.s | 200 |
| Gelierzeit b. 100 °C min | 21 |
| Alkali (titriert, ber. als NaOH) % | 3,8 |
| Formaldehydgehalt % | 0,2 |
| Alkali (teoretisch, ber.als NaOH) % | 4,0 |

Die Ergebnisse der Spanplattenprüfung dieses Harzes sind in Tabelle III wiedergegeben.

**Beispiel 6 (Vergleichsbeispiel)**

Dieses Beispiel beschreibt ein heute übliches Spanplatten-Phenolharz, das in der Mittelschicht wie auch in der Deckschicht von Spanplatten verarbeitet wird.

505 Gewichtsteile Phenol (5,37 Mol) und 218 Gewichtsteile Natronlauge 50 %-ig wurden in einem Kolben auf 80 °C erhitzt. Innerhalb von 1 h wurden 1 104 Gewichtsteile Formalin 38 %-ig (14 Mol) unter Beibehaltung der Temperatur zugegeben. Bei Erreichen von 900 mPa.s wurde die Temperatur auf 70 °C gesenkt. Bei 1 700 mPa.s wurden 169 Gewichtsteile Natronlauge 50 %-ig zudosiert, und der Ansatz wurde abgekühlt.

Das Harz hatte folgende Kennzahlen:

| | |
|---|---|
| Feststoffgehalt % | 48,1 |
| Viskosität b. 20 °C mPa.s | 750 |
| Gelierzeit b. 100 °C min | 30 |
| Alkali (titriert, ber. als NaOH) % | 8,2 |
| Alkali (theoretisch, ber. als NaOH) % | 9,7 |
| Formaldehydgehalt % | 0,3 |

Die erhaltenen Spanplattenergebnisse sind in den Tabellen III und VII aufgelistet.

**Tabelle III**

Spanplatteneigenschaften

| | | Beispiel | | Vergleichsbeispiele | | | |
|---|---|---|---|---|---|---|---|
| | | 3 | | 4 | | 5 | 6 |
| Decklage | | | 8 % atro Phenolharz/atro Span | | | | |
| Spanfeuchte vor Beleimung/atro Span | % | 7,6 | | 7,6 | | 2,6 | 8,7 |
| Alkalibelastung NaOH/atro Span | % | 0,72 | | 0,72 | | 0,91 | 1,61 |
| Mittellage | | | 6 % atro Harz/atro Span | | | | |
| | | MDI | 3 % MDI und 3 % Phenolharz | | | | |
| Spanfeuchte vor Beleimung/atro Span | % | 9,2 | 6,5 | 6,5 | | 4,6 | 7,0 |
| Alkalibelastung NaOH/atro Span | % | - | 0,27 | 0,27 | | 0,34 | 0,60 |
| Preßzeit | min | 2,4 | 1,9 | 2,4 | 1,9 2,4 | 2,4 | 2,4 |
| Biegefestigkeit DIN 68763 | N/mm² | 18,5 | 18,0 | 18,5 | + 17,1 | 18,0 | 18,6 |
| Querzugfestigkeit V 100 DIN 68763 | N/mm² | 0,27 | 0,21 | 0,25 | 0,20 | 0,24 | 0,18 |
| Dickenquellung nach 24 h Wasserlagerung DIN 68763 | % | 9,5 | 9,2 | 8,8 | 9,3 | 9,5 | 10,5 |
| Perforatorwert ++ | | | 3,9 | 4,0 4,0 | - 4,2 | 4,1 | 4,0 |

+ nicht geprüft, da Platte Preßblechverklebung und Spalter an Ecken zeigt
++ abgespaltetes Formaldehyd in mg/100 g atro Spanplatte

Aus der Tabelle III ist zunächst ersichtlich, daß sowohl für die Mittelschicht wie auch für die Deckschicht der Span im Falle des Vergleichsbeispiels 5 (35 %-iges Phenolharz nach DE-PS-2 944 178) gegenüber dem erfindungsgemäßen Harz aus Beispiel 3 erheblich stärker zurückgetrocknet werden muß, was ein wesentlicher wirtschaftlicher Vorteil der Erfindung ist. Hinsichtlich der Alkalibelastung der Späne liegt der Wert aus Beispiel 3 um 26 % günstiger als der aus Vergleichsbeispiel 5, wobei jeweils vom Mittelwert der beanspruchten Feststoffbereiche ausgegangen worden ist. Die unterschiedliche Alkalibelastung wird noch deutlicher beim Vergleich zu Vergleichsbeispiel 6 (ein heute angewandtes übliches "8 % Alkaliphenolharz"). Da der Alkaligehalt der Spanplatte für ihre Hygroskopizität verantwortlich ist, eignen sich die erfindungsgemäßen Harze besonders gut für die Herstellung von praktisch feuchteunempfindlichen Spanplatten.

Trotz der sehr schlechten Lagerstabilität des Harzes aus Vergleichsbeispiel 4, dessen Viskosität von 200 mPa.s nach 3-wöchiger Lagerung bei Raumtemperatur auf 1400 mPa.s im Vergleich zu 600 mPa.s des Harzes aus Beispiel 3 ansteigt, wurde dieses Harz zum Vergleich in die Spanplattenherstellung mit einbezogen.

Fig. 1 zeigt als Diagramm die Abhängigkeit der Viskosität von der Lagerzeit bei 20 °C in Wochen, worin Kurve A die Lagerfähigkeit des Harzes des Beispiels 3 und Kurve B die Lagerfähigkeit des Harzes des Beispiels 4 (Vergleich) wiedergibt.

Die Biegefestigkeiten der neuartigen Harze unterscheiden sich praktisch nicht von den unmodifizierten, harnstoffreien Harzen der Vergleichsbeispiele 5 und 6, während das harnstoff-modifizierte Harz des Vergleichsbeispiels 4 in diesem Wert stark abfällt. Dieses Harz zeigt auch eindeutige Nachteile in der Abbindegeschwindigkeit, wie aus den Versuchen mit 1,9 minütiger Preßzeit hervorgeht.

Die Querzugfestigkeit V 100 zeigt auf der einen Seite den nur sehr geringen Abfall gegenüber einer reinen MDI-Mittelschicht und auf der anderen Seite die Überlegenheit gegenüber Vergleichsbeispiel 4 und 6. Die erzielbaren hohen Querzugfestigkeiten in der Kombination der erfindungsgemäßen Harze mit Isocyanat zeigen die hohe wirtschaftliche Bedeutung gegenüber der ausschließlich mit MDI gebundenen Mittelschicht auf.

Wie die Werte der Dickenquellung zeigen, zeichnen sich die erfindungsgemäßen Harze gegenüber den alkalireichen Harzen des Vergleichsbeispiels 6 aus.

Die gefundenen Perforatorwerte entsprechen denen üblicher unmodifizierter Phenolharze.

## Beispiel 7

Dieses Beispiel zeigt den viskositätserniedrigenden Einfluß von Harnstoff auf ein hochkondensiertes, alkalireiches Phenolharz.

941 Gewichtsteile Phenol (10 Mol) und 236 Gewichtsteile 50 %-iger Natronlauge wurden in einem Kolben auf 90 °C aufgeheizt. Innerhalb von 80 min wurden unter Beibehaltung der Temperatur 1 960 Gewichtsteile Formalin 40 %-ig (26 Mol) zugegeben, daran anschließend 212 Gewichtsteile 50 %-ige Natronlauge. Bei 80 °C wurde bis zu einer Viskosität von 4 200 mPa.s kondensiert und innerhalb 15 min 440 Gewichtsteile 50 %-ige NaOH zugegeben. Anschließend wurde die Temperatur auf 65 °C gesenkt und die Reaktion nach Erreichen einer Viskosität von 7 200 mPa.s dadurch abgebrochen, daß 940 Gewichtsteile Harnstoff zuchargiert wurden.

Tabelle IV

|  | vor | nach |
|---|---|---|
|  | Harnstoffzugabe | |
| Feststoffgehalt % | 48,4 | 53,5 |
| Viskosität b. 20 °C mPa.s | 7 200 | 900 |
| Gelierzeit b. 100 °C min | 8 | 23 |
| Alkaligehalt (titriert, ber. als NaOH) % | 10,6 | 8,0 |
| Formaldehydgehalt % | 1,5 | 0,3 |
| Alkaligehalt (theoretisch, ber. als NaCH) % | 11,7 | 9,4 |

Aus der Tabelle ist der durch Harnstoff-Zusatz hervorgerufene starke Viskositätsabfall ersichtlich. Der frei vorliegende Formaldehyd wird weitgehend in Methylolharnstoff überführt.

## Beispiel 8

941 Gewichtsteile Phenol (10 Mol) und 236 Gewichtsteile 50 %-iger Natronlauge wurden in einem Kolben auf 90 °C aufgeheizt. Innerhalb von 80 min wurden 2 100 Gewichtsteile Formalin 40 %-ig (28 Mol) zugegeben, daran anschließend 360 Gewichtsteile 50 %-ige Natronlauge. Es wurde 30 min bei 85 °C kondensiert, dann die Temperatur innerhalb weiterer 30 min auf 65 °C gesenkt und bei einer Viskosität von 2 800 mPa.s 720 Gewichtsteile Harnstoff zugegeben.

Tabelle V

| Feststoffgehalt % | 53,2 |
|---|---|
| Viskosität b. 20 °C mPa.s | 620 |
| Gelierzeit b. 100 °C min | 13 |
| Alkaligehalt (titriert, ber. als NaOH) % | 6,1 |
| Alkaligehalt (theoretisch, ber. als NaOH) % | 6,8 |
| Formaldehydgehalt % | 0,4 |

**Beispiel 9 (Vergleichsbeispiel)**

Im Vergleich zu Beispiel 7 wurden in einem Kolben zu 941 Gewichtsteilen Phenol (10 Mol), 236 Gewichtsteilen Natronlauge 50 %-ig und 940 Gewichtsteilen Harnstoff bei 90 °C innerhalb von 80 min unter Beibehaltung der Temperatur 1 960 Gewichtsteile Formalin 40 %-ig (26 Mol) zudosiert. Anschließend erfolgte innerhalb 15 min eine Zugabe von 212 Gewichtsteilen Natronlauge. Innerhalb von weiteren 30 min wurde die Temperatur auf 75 °C gesenkt und bei 1 800 mPa.s in 15 min 440 Gewichtsteile Natronlauge 50 %-ig zugefügt. Bei dieser Temperatur wurde bis zu einer Viskosität von 900 mPa.s kondensiert, dann erfolgte Abkühlung auf Raumtemperatur.

Das stark nach $NH_3$ riechende Harz hatte am folgenden Tag die nachstehend aufgeführten Kenndaten:

Tabelle VI

| Feststoffgehalt % | 54,4 |
|---|---|
| Viskosität b. 20 °C mPa.s | 780 |
| Gelierzeit b. 100 °C min | 40 |
| Alkaligehalt (titriert, ber. als NaOH) % | 9,7 |
| Alkaligehalt (theoretisch, ber. als NaOH) % | 9,4 |
| Formaldehydgehalt % | 0,5 |

**Tabelle VII**

| Plattenart | Dreischichtplatten | |
|---|---|---|
| Beleimung atro Harz/atro Holz | 8 % | |
| Hydrophobierung Paraffin/atro Holz | 1 % | |
| Kaliumcarbonat/atro Leim | 6 % | Mittelschicht |
| Restfeuchte | 15,7 % | Deckschicht |
| | 9,2 % | Mittelschicht |
| Preßtemperatur | 180° C | |
| Preßdruck | 22 bar | |

| | | Beispiel 7 | | Vergleichsbeispiele 6 | | Vergleichsbeispiele 9 | |
|---|---|---|---|---|---|---|---|
| Preßzeit | min | 2,4 | 3,6 | 2,4 | 3,6 | 2,4 | 3,6 |
| Biegefestigkeit 68763 | N/mm$^2$ | 17,0 | 20,4 | | 18,6 | 15,3 | 16,0 |
| Querzugfestigkeit V 100 DIN 68763 | N/mm$^2$ | 0,20 | 0,26 | Platzer | 0,25 | 0,1 | 0,14 |
| Dickenquellung nach 24 h Wasserlagerung DIN 68763 | % | 10,4 | 10,7 | | 11,0 | 10,9 | 10,9 |
| Formaldehydabspaltung atro Spanplatte (Perforatorwert) | mg/100g | 4,0 | | 3,9 | | 4,1 | |

8

Auch aus Tabelle VII geht hervor, daß die erfindungsgemäßen Harte einen wesentlichen Vorteil bei der Fertigung von Spanplatten gegenüber den zur Zeit eingesetzten konventionellen Phenolharzen bringen. So erlaubt das erfindungsgemäße Harz gemäß Beispiel 7 eine um ein Drittel kürzere Preßdauer bei vergleichbaren Platteneigenschaften gegenüber dem im Vergleichsbeispiel 6 beschriebenen konventionellen Phenolharz. Darüber hinaus sind die neuwertigen Bindemittel von der Zusammensetzung her wirtschaftlicher.

Die mit dem im Vergleichsbeispiel 9 beschriebenen Harz gefertigten Spanplatten genügen den Anforderungen nicht. Ein solches Harz ist für den industriellen Einsatz ungeeignet, da sowohl die Querzugfestigkeit als auch die Biegefestigkeit nicht die geforderten Werte erreichen.

Die Formaldehydabspaltung liegt bei den erfindungsgemäßen Harzen in dem für Phenolharze üblichen Rahmen von unter 5 mg pro 100 g atro Platte (Perforatorwert).

**Patentansprüche**

1. Verfahren zur Herstellung von modifizierten Phenolharz-Bindemitteln,
   **dadurch gekennzeichnet,**
   daß Phenolformaldehydharze mit einer Viskosität von mindestens 600 mPa.s (bei 20° C) bei einem Feststoffgehalt von 20 bis 55 % in an sich bekannter Weise hergestellt und den erhaltenen viskosen Phenolharzlösungen 2 bis 30 Gew.-% Harnstoff, bezogen auf die Phenolharzlösung, zugesetzt werden, wobei die Herstellung der Phenolformaldehydharze mit soviel Alkali erfolgt, daß die resultierende modifizierte Harzlösung 2 bis 12 Gew.-% Alkali (titriert, berechnet NaOH) enthält.

2. Verfahren nach Anspruch 1,
   **dadurch gekennzeichnet,**
   daß der Feststoffgehalt der modifizierten Harzlösungen zwischen 30 und 65 %, bevorzugt 40 bis 60 % beträgt.

3. Anwendung der nach Anspruch 1 oder Anspruch 2 hergestellten modifizierten Harzlösungen als Bindemittel zur Herstellung von Materialien aus Preßspan, vorzugsweise von drei-und mehrschichtigen Spanplatten.

4. Anwendung nach Anspruch 3 der modifizierten Harzlösungen, die 2 bis 6 Gew.-% Alkali enthalten, als Bindemittel für Decklagenspäne.

5. Anwendung nach Anspruch 3 der modifizierten Harzlosungen, die 2 bis 6 Gew.-% Alkali enthalten, für die Deck- und insbesondere Mittellagenspäne zusammen mit Isocyanatbindemitteln, wobei die Beleimung der Späne mit der Bindemittelmischung oder mit den separaten Bindemittelkomponenten erfolgt.

6. Anwendung nach Anspruch 3 der modifizierten Harzlösungen mit mehr als 6 bis 12 Gew.-% Alkali als Bindemittel für Decklagen- und insbesondere Mittellagenspäne.

**Claims**

1. Process for producing modified phenolic resin bonding agents **characterized by** preparing as known per se phenol-formaldehyde resins with a viscosity of at least 600 mPa.s (at 20 °C) with a solids content of 20 to 55 % and adding to the viscous phenolic resin solutions 2 to 30 wt.% urea, relative to the phenolic resin solution, the phenol-formaldehyde resins being prepared with as much alkali as is required to ensure that the modified resin solution resulting therefrom contains 2 to 12 wt.% alkali (titrated, calculated as NaOH).

2. Process according to claim 1 **characterized by** a solids content of the modified resin solutions of between 30 and 65 %, preferably 40 and 60 %.

3. Use of the modified resin solutions prepared according to claim 1 or claim 2 as bonding agents for the production of materials made of pressed particles, preferably of triple-layer and multilayer particle board.

4. Use according to claim 3 of the modified resin solutions containing 2 to 6 wt.% alkali as bonding agents for outer-layer particles.

**5.** Use according to claim 3 of the modified resin solutions containing 2 to 6 wt.% alkali for outer-layer particles, particularly for center-layer particles, together with isocyanate bonding agents, the particles being glued either with the bonding agents mixture or separately with the bonding agent components.

**6.** Use according to claim 3 of the modified resin solutions containing more than 6 to 12 wt.% alkali as bonding agents for outer-layer particles, particularly for center-layer particles.

**Revendications**

**1.** Procédé de production de liants à base de résines phénoliques modifiées, caractérisé en ce qu'on produit de façon connue des résines phénol-formaldéhyde ayant une viscosité d'au moins 600 mPa.s (à 20°C) pour une teneur en matières solides de 20 à 55% et on ajoute aux résols phénoliques visqueux ainsi obtenus de 2 à 30% en poids d'urée, par rapport au résol phénolique, en utilisant pour la production des résines phénol-formaldéhyde suffisamment d'alcali pour que le résol modifié obtenu contienne 2 à 12% en poids d'alcali (titré, exprimé en NaOH).

**2.** Procédé selon la revendication 1, caractérisé en ce que la teneur en matières solides des résols modifiés est comprise entre 30 et 65%, de préférence entre 40 et 60%.

**3.** Utilisation des résols modifiés produits selon la revendication 1 ou 2 comme liants pour la fabrication de matériaux en particules agglomérées, de préférence pour des panneaux de particules à trois couches ou plus.

**4.** Utilisation des résols modifiés selon la revendication 3 contenant de 2 à 6% en poids d'alcali, comme liant pour l'agglomération des particules dans les couches extérieures.

**5.** Utilisation des résols modifiés selon la revendication 3, contenant de 2 à 6% en poids d'alcali en combinaison avec des liants isocyanate pour l'agglomération des particules dans les couches extérieures, particulièrement dans la couche centrale, en utilisant pour le collage des particules un mélange de liants ou les liants séparés.

**6.** Utilisation des résols modifiés selon la revendication 3 contenant de 6 à 12% en poids d'alcali comme liants pour l'agglomération des particules dans les couches extérieures, particulièrement dans la couche centrale.

Fig.1

EP 0 146 881 B2

11